# EUROPÄISCHE PATENTSCHRIFT

(11) **EP 1 688 227 B1**
(45) Veröffentlichungstag und Bekanntmachung des Hinweises auf die Patenterteilung: **19.03.2008**
(21) Anmeldenummer: 05028618.6
(22) Anmeldetag: 29.12.2005
(51) Int. Cl.: B27C 9/04, B27M 1/08, B23Q 1/01, B23Q 7/04, B27C 5/06, B27B 5/06

(54) **Verfahren zum Betrieb einer Holzbearbeitungsmaschine und Holzbearbeitungsmaschine**
Method of operation of a wood working machine and wood working machine
Procédé de fonctionnement d'une machine à usiner le bois et machine à usiner le bois

(30) Priorität: 01.02.2005 DE 102005004578
(43) Veröffentlichungstag der Anmeldung: 09.08.2006
(73) Patentinhaber: IMA Klessmann GmbH Holzbearbeitungssysteme, 32312 Lübbecke (DE)
(72) Erfinder: Lindenschmidt, Detlef, 32584 Löhne (DE); Redeker, Günter, 32351 Stemwede-Levern (DE)
(74) Vertreter: Elbertzhagen, Otto

(56) Entgegenhaltungen:
- DE-A1- 10 026 069
- DE-A1- 10 358 100
- DE-A1- 19 846 819
- DE-U1- 29 807 071

## Beschreibung

Die Erfindung bezieht sich auf ein Verfahren gemäß dem Oberbegriff des Patentanspruchs 1 und auf eine Holzbearbeitungsmaschine nach dem Oberbegriff des Patentanspruchs 6.

Aus dem Dokument DE 298 07 071 U1 ist eine Holzbearbeitungsmaschine mit zwei unter einem Portal hindurch verfahrbaren und positionierbaren Werkstücktischen bekannt. Solche Maschinen werden so betrieben, daß die Bearbeitungsfolge, die an den einzelnen Werkstücken vorzunehmen ist, bei einmaliger Aufspannung jedes Werkstückes auf dem betreffenden Werkstücktisch vorgenommen wird. Die Werkstücke erfahren auf jedem der beiden Werkstücktische die gleiche Bearbeitung, dazu wechseln die am Portal angeordneten Bearbeitungsaggregate zwischen den beiden Werkstücktischen hin und her. Die Verfahrrichtung der Werkstücktische quer unter dem Portal hindurch bildet hierbei die erste Maschinenachse, üblicherweise die X-Achse. Senkrecht dazu erstreckt sich die zweite Maschinenachse, die Y-Achse, die durch die Längsrichtung des Portals vorgegeben ist und in der die Bearbeitungsaggregate verfahren. So können die auf jedem der beiden Werkstücktische aufgespannten, vorformatieren Werkstücke nacheinander in der einen Aufspannung fertig formatiert, gegebenenfalls mit Bohrungen versehen und mit einem Kantenmaterial beleimt werden, dessen Überstände über die Breitseiten der plattenförmigen Werkstücke abgetragen werden, wonach die Bearbeitungsfolge beendet ist. Man spricht bei Portalmaschinen dieser Art von Maschinen mit Wechseltischen und der sogenannten Wechselplatzbelegung, denn die Arbeitsspiele für die Werkstücke auf den beiden Werkstücktischen sind so aufeinander abgestimmt, daß der jeweils eine Tisch umgerüstet werden kann während die Werkstückbearbeitung an dem jeweils anderen Werkstücktisch abläuft.

Aus dem Dokument DE 198 46 819 A1 ist eine Plattenbearbeitungsmaschine bekannt, die zwei mit einem Portal zusammenwirkende Werkstücktische aufweist. Einer der Werkstücktische ist unter dem Portal hindurch verfahrbar und bildet an der einen Seite des Portals am betreffenden Ende seines Verfahrweges einen Rüstplatz, an welchem die zu bearbeitenden Werkstücke aufgegeben werden. Es handelt sich um formatierte Platten, in die gebohrt und eingeschraubt wird und deren Schmalseiten mit einem Kantenmaterial beschichtet werden, welches anschließend besäumt wird. Dazu werden die plattenförmigen Werkstücke zwischen den beiden Werkstücktischen maschinell umgesetzt, hierfür ist eine entlang dem Portal verfahrbare Werkstücktransportvorrichtung vorgesehen. Der zweite, stationäre Werkstücktisch weist zum Verfahren der Werkstücke eine integrierte Fördereinrichtung auf.

Es gibt zusätzliche Bearbeitungen an plattenförmigen Werkstücken, die man bislang außerhalb einer Holzbearbeitungsmaschine der vorgenannten Art durchführen muß. Dies ist vor allem dann der Fall, wenn es um die schnittoptimierte Aufteilung einer großformatigen Rohplatte zu formatierten Einzelplatten geht. Dafür verwendet man Aufteilsägen, welche die Formatierung der Einzelplatten vornehmen.

Aus dem Dokument 196 37 954 A1 sind Holzbearbeitungsmaschinen mit Bearbeitungsplätzen bekannt, auf die eine großformatige oder halbformatige Rohplatte mit einem Teilbereich aufgeschoben werden kann, aus dem mit an der Maschine vorhandenen Werkzeugen eine Einzelplatte im kleineren Format freigeschnitten wird. Dazu wird auf dem Bearbeitungsplatz der freizuschneidende Abschnitt der großformatigen Platte gespannt, nach dem Abteilen der formatierten Einzelplatte wird die restliche Rohplatte wieder zurückgezogen, und es werden in bleibender Aufspannung die weiteren Bearbeitungen an der abgeteilten Einzelplatte vorgenommen.

In dem nachveröffentlichten Dokument DE 103 58 100 A1 ist ein Verfahren und eine Maschine zum Aufteilen großformatiger Platten beschrieben, wobei es sich bei der Maschine um eine Portalmaschine handelt. Unter dem Portal hindurch sind zwei Bearbeitungstische verfahrbar, wobei am Ende des Verfahrweges des ersten Bearbeitungstisches die aufzuteilende Rohplatte auf den ersten Bearbeitungstisch aufgegeben wird. Mittels der Relativbewegung zwischen dem Bearbeitungstisch und einem am Portal verfahrbaren Schneidaggregat werden die Umfangskonturen der freizuschneidenden Einzelplatten in die Oberseite der Rohplatte eingeschnitten. Am Ende des Verfahrweges des ersten Bearbeitungstischeshinter dem Portal wird die Rohplatte auf den dort bereitstehenden zweiten Bearbeitungstisch mittels einer Schwenkeinrichtung umgesetzt, die zugleich die Rohplatte wendet. Von der nunmehr obenliegenden Unterseite der Platte her werden mittels des Schneidaggregates am Portal in relativer Bewegung zwischen dem zweiten Bearbeitungstisch und dem Schneidaggregat entlang ihren Umfangskonturen die Einzelplatten freigeschnitten.

Der Erfindung liegt die Aufgabe zugrunde, eine Portalmaschine mit zwei unter einem Portal hindurch verfahrbaren und positionierbaren Werkstücktischen so zu nutzen, daß in einem Arbeitsgang eine Fertigbearbeitung der plattenförmigen Werkstücke ausgehend von einer großformatigen Rohplatte vorgenommen werden kann.

Diese Aufgabe wird zum einen durch die Verfahrensmerkmale des Patentanspruchs 1 und zum anderen durch die gegenständlichen Merkmale des Patentanspruchs 6 gelöst.

Für die Erfindung ist wesentlich, daß die Rohplatte am Rüstplatz in horizontaler, flachliegender Ausrichtung auf den Werkstücktisch aufgelegt und dort gespannt wird. Derjenige Bereich der Rohplatte, der als formatierte Platte vereinzelt werden soll, kann während der Aufspannung auf dem ersten Werkstücktisch vor oder nach dem Formatieren schon weiterbearbeitet werden, indem Lochreihen eingebohrt werden, wie sie bei Seitenwänden von Möbelkorpussen vorgesehen werden, um Bodenträger anbringen zu können. In gleicher Weise können auch Lochbilder für Verdübelungen an der obenliegenden Seite der plattenförmigen Werkstücke angebracht werden. Nach dem Formatieren erfolgt das Umsetzen der nunmehr von der Rohplatte getrennten Einzelplatten auf den zweiten Werkstücktisch unter Beibehalten der horizontalen Ausrichtung, wo eine Kantenbearbeitung an den aufrechten Schmalseiten vorgenommen wird. Insbesondere wird an den betreffenden Plattenschmalseiten, wo dies vorgesehen ist, ein Kantenanleimer angebracht, der anschließend besäumt wird, um ihn mit den an die betreffende Schmalseite winklig anschließenden Plattenseiten bündig abschließen zu lassen. Vom Zuschnitt bis zum Fertigteil ergibt sich so eine Komplettbearbeitung der Werkstücke auf derselben Maschine.

Die weiteren Ausgestaltungsmerkmale der Erfindung ergeben sich aus den Unteransprüchen und aus der nachstehenden Beschreibung einer für das erfindungsgemäße Verfahren eingerichteten Holzbearbeitungsmaschine anhand der Zeichnung.

In der Zeichnung zeigt:
- Fig. 1: die Draufsicht auf eine Holzbearbeitungsmaschine,
- Fig. 2: die Draufsicht auf eine Holzbearbeitungsmaschine in gegenüber nach Figur 1 modifizierter Ausführung und
- Fig. 3: die Seitansicht der Holzbearbeitungsmaschine nach Figur 2.

Im einzelnen erkennt man in der Zeichnung ein horizontal verlaufendes Portal 1, welches über zwei Werkstücktische 2, 3 hinwegreicht, die quer zur Portallängsrichtung verfahrbar und positionierbar sind. Dementsprechend sind die Werkstücktische 2, 3 auf miteinander parallelen Führungen gelagert und mit geeigneten, steuerbaren Antrieben versehen.

Der erste Werkstücktisch 2 weist eine horizontale Werkstückspannplatte 2.1 auf, bei der es sich vornehmlich um eine Rasternutenplatte handelt, die in gesamten und in partiellen Bereichen an der Oberseite mit Unterdruck beaufschlagt werden kann, um darauf plattenförmige Werkstücke zu fixieren. Der Werkstücktisch 2 befindet sich in der gezeichneten Darstellung in seiner einen Endlage, in der er sich seitlich von der einen Längsseite 1.1 des Portals 1 befindet und somit frei von oben her zugänglich ist. An dieser Stelle des Werkstücktisches 2 ist ein Rüstplatz 2.2 eingerichtet, der für wenigstens eine Bedienungsperson 2.3 zugänglich ist. Von Hand oder maschinell wird am Rüstplatz 2.2 auf den ersten Werkstücktisch 2 eine groß- oder halbformatige Platte 4 aufgelegt und dort gespannt, aus der bei der gewählten Darstellung beispielsweise schon zwei formatierte Einzelplatten 4.1 und 4.2 herausgeschnitten worden sind, an denen die Bearbeitungsfolge bereits fortgeschritten ist.

An der vom Rüstplatz 2.2 abliegenden Längsseite 1.2 des Portals 1 ist ein Frässupport 5 in der Längsrichtung des Portals 1 verfahrbar und positionierbar angeordnet.

Der Frässupport 5 ist mit zumindest einer Arbeitsspindel 5.1 ausgestattet, in die ein Fräs- oder Schneidwerkzeug eingewechselt werden kann. Bedient wird die Arbeitsspindel 5.1 aus einem mit dem Frässupport 5 mitgeführten Magazin 5.4. Weiter ist der Frässupport 5 mit Bohrspindeln 5.2, 5.3 versehen. Die Reihen dieser Bohrspindeln 5.2, 5.3 verlaufen längs und quer zum Portal 1, um an den zu bearbeitenden Werkstücken in Längs-und/oder Querrichtung sich erstreckende Lochreihen anbringen zu können.

Die Rohplatte 4 wird mit demjenigen Bereich, aus dem die jeweils nächstfolgende, formatierte Einzelplatte in gleicher Weise wie die Einzelplatten 4.1, 4.2 freigeschnitten wird, mittels des Werkstücktisches 2 in den Arbeitsbereich des Frässupportes 5 verfahren, wonach durch Relativbewegung zwischen dem Frässupport 5 und dem Werkstücktisch 2 der zu vereinzelnde Bereich der Rohplatte 4 freigeschnitten und gegebenenfalls an der obenliegenden Seite mit Lochreihen oder sonstigen Lochbildern versehen wird. Danach fährt der Werkstücktisch 2 in eine solche Position, in der die aus der Rohplatte 4 freigeschnittene Einzelplatte nach oben hin abgehoben werden kann.

An dem Portal 1 an der dem Rüstplatz 2.2 zugekehrten Längsseite 1.1 ist ein die Einzelplatte 4.1, 4.2 aufnehmender Transportsupport 6 verfahrbar und positionierbar angeordnet, der vorzugsweise als Saugtraverse mit Saugaufnehmern 6.1 ausgestattet ist. Die Saugaufnehmer 6.1 werden auf die aus der Rohplatte 4 ausgeschnittene Einzelplatte 4.1, 4.2 abgesenkt und heben diese, wie dargestellt an der Einzelplatte 4.1, nach oben hin vom ersten Werkstücktisch 2 ab, nachdem zuvor in dem die Einzelplatte 4.1 betreffenden Bereich die Spannung bzw. Fixierung für diese Einzelplatte 4.1 gelöst worden ist. Durch Verfahren entlang dem Portal 1 befördert der Transportsupport 6 die betreffende Einzelplatte 4.1 bzw. 4.2 unter Beibehalten der horizontalen Ausrichtung zum zweiten Werkstücktisch 3, der maschinell rüstbar ist und eine horizontale Werkstückspannebene aufweist.

Dazu ist der zweite Werkstücktisch 3 mit quer zum Portal 1 sich erstreckenden Traversen 3.1 versehen, die in der Längsrichtung des Portals 1, also in ihrer Querrichtung verfahrbar und positionierbar sind. Auf den Traversen 3.1 sind Saugspanner 3.2 angeordnet, die wiederum in der Längsrichtung der Traversen 3.1 bzw. quer zum Portal 1 auf den Traversen 3.1 verfahrbar und positionierbar sind. Die Saugspanner 3.2 werden so justiert, daß die jeweils von dem Transportsupport 6 herangebrachte Einzelplatte 4.1 bzw. 4.2 in einer für die weitere Bearbeitung auf dem zweiten Werkstücktisch 3 passenden, horizontalen Position gespannt wird. Die nicht benötigten Traversen 3.1 und Saugspanner 3.2 verbleiben in einer Parkposition.

Auf dem Werkstücktisch 3 werden die Einzelplatten 4.1, 4.2 so gespannt, daß ihre randlichen Schmalseiten freiliegen und von Bearbeitungsaggregaten umfahren werden können. Dazu gehört ein Kantenanleimaggregat 7, welches an der gleichen Längsseite 1.1 des Portals 1 wie der Transportsupport 6 verfahrbar und positionierbar angeordnet ist. Durch eine Relativbewegung zwischen dem um 360° drehbaren Kantenanleimaggregat 7 und dem Werkstücktisch 3 können grundsätzlich alle Schmalseiten der auf dem zweiten Werkstücktisch 3 gespannten Werkstücke 4.1, 4.2 umfahren und mit einem Kantenmaterial beschichtet werden. Die Besäumung des Kantenmaterials erfolgt mittels des Frässupportes 5 durch geeignete Fräswerkzeuge, die in dessen Arbeitsspindel 5.1 vom Magazin 5.4 her eingewechselt werden. Die Besäumung erfolgt wiederum durch ein Verfahren des zweiten Werkstücktisches 3 und des Frässupports 5 relativ zueinander. Der Arbeitsbereich des Frässsupports 5 erstreckt sich somit sowohl über den ersten Werkstücktisch 2 als auch über den zweiten Werkstücktisch 3 hinweg. Je nach der gewünschten Bearbeitungsgeschwindigkeit und Kompliziertheit der spannehmenden Bearbeitungsvorgänge kann auch ein zweiter Frässupport 5 an der vom Rüstplatz 2.2 abliegenden Längsseite 1.2 des Portals 1 vorgesehen sein.

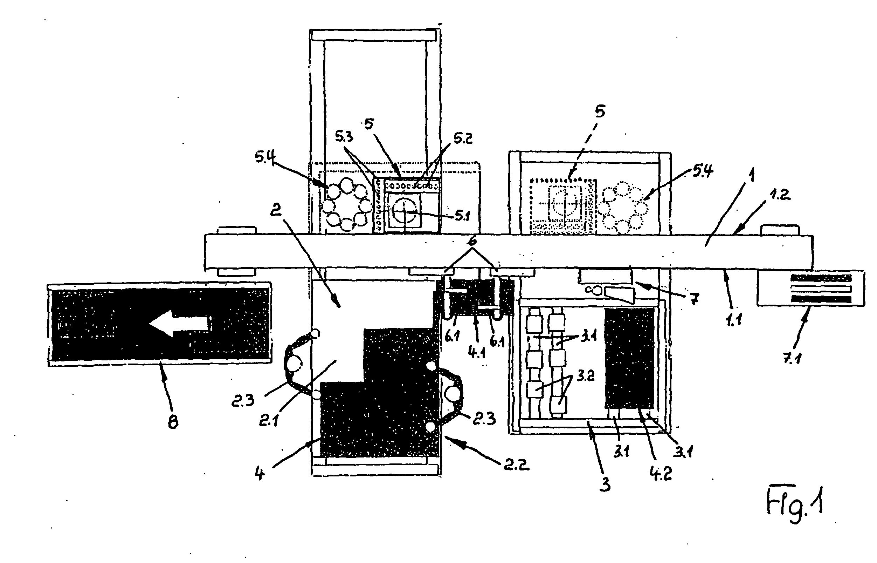

An derjenigen Seite des zweiten Werkstücktisches 3, die von dem ersten Werkstücktisch 2 abliegt, ist das Portal 1 verlängert, und in dem Endbereich des Portals 1 ist ein Kantenmagazin 7.1 in Abstand vom zweiten Werkstücktisch 3 angeordnet. Bis zu diesem Kantenmagazin 7.1 hin ist am Portal 1 das Kantenanleimaggregat 7 verfahrbar, um sich dort den jeweils benötigten Streifen des Kantenmaterials abzuholen. In dem verlängerten Endbereich des Portals 1 kann das Kantenanleimaggregat 7 im Bedarfsfall eine Parkposition anfahren, in welcher der die Werkstücke 4.1, 4.2 aufnehmende Transportsupport 6 bis in den Bereich oberhalb des zweiten Werkstücktisches 3 verfahrbar ist, ohne mit dem Kantenanleimaggregat 7 zu kollidieren. Grundsätzlich können das Kantenanleimaggregat 7 und der Transportsupport 6 so ausgebildet und am Portal 1 geführt sein, daß sie auch in einander überschneidenden Positionen agieren können. Diese Möglichkeit besteht vor allem dann, wenn das Kantenanleimaggregat 7 an der anderen Längsseite des Portals, nämlich bezogen auf Figur 1 ander Längsseite 1.2, angeordnet sind, entlang der der Transportsupport 6 nicht verfährt.

Auch an dem dem Kantenmagazin 7.1 gegenüberliegenden Ende ist das Portal 1 über den ersten Werkstücktisch 2 hinaus verlängert, und zwar soweit, daß daran der Transportsupport 6 mit der von ihm aufgenommenen Einzelplatte 4.1 bzw. 4.2 bis zu einer Aufgabestation einer die Werkstücke abtransportierenden Vorrichtung 8 verfahrbar ist, auf die der Transportsupport 6 die fertig bearbeiteten Einzelplatten 4.1, 4.2 absetzt.

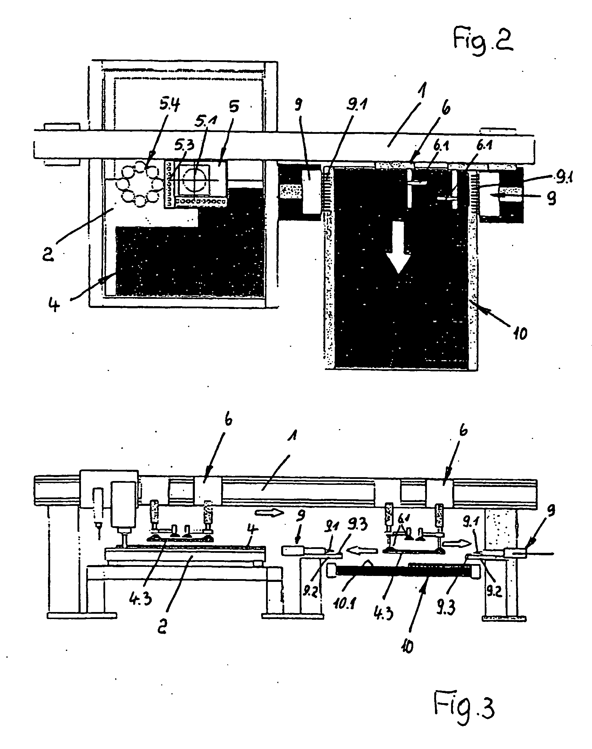

In den Figuren 2 und 3 ist eine Holzbearbeitungsmaschine dargestellt, die gegenüber der Ausführung nach Figur 1 modifiziert ist. Grundsätzlich können die an dieser Maschine dargestellten, abweichenden Merkmale an der Ausführungsform nach Figur 1 vorhanden sein, andererseits kann die Maschine gemäß den Figuren 2 und 3 jedoch auch für sich als Bohr- und Dübelautomat zum Einsatz kommen.

Soweit es bei dem Ausführungsbeispiel nach den Figuren 2 und 3 den ersten Werkstücktisch 2 und die Aufteilung einer Rohplatte 4 mittels des Frässupportes 5 betrifft, ist die Funktionsweise und im wesentlichen der Aufbau der gleiche wie bei der Ausführungsform der Maschine nach Figur 1. Insoweit ist es unerheblich, daß der Frässupport 5 auch an der anderen Seite des Portals 1 angeordnet sein kann. Die aus der Rohplatte 4 ausgeschnittene Einzelplatte 4.3 wird auch bei der Maschine nach den Figuren 2 und 3 in gleicher horizontaler Ausrichtung von dem Transportsupport 6 aufgenommen und entlang dem Portal 1 befördert, wobei hier an dem zweiten Bearbeitungsplatz, der neben dem ersten Bearbeitungsplatz des ersten Werkstücktisches 2 liegt, an den Schmalseiten der Werkstücke 4.3 Horizontalbohrungen angebracht und darin im Bedarfsfall Dübel eingesetzt werden.

In einer Höhe, die mittels Saugaufnehmer 6.1 des Transportsupportes 6 mit den Schmalseiten der daran hängenden Einzelplatte 4.3 angefahren werden kann, sind an dem zweiten Bearbeitungsplatz zwei Bohr- und Dübelaggregate 9 angeordnet, die in der Horizontalrichtung einen solchen Abstand voneinander haben, daß die Einzelplatten 4.3 in beliebiger Breite dazwischen von oben her eingesenkt werden können. Die Bohr- und Dübelaggregate 9 weisen Werkzeuge 9.1 auf, die an den einander zugekehrten Seiten der Bohr- und Dübelaggregate 9 angeordnet sind. Unter den Werkzeugen 9.1 kragen an den Bohr- und Dübelaggregaten 9 Werkstückauflagen 9.2 vor, an deren Oberseiten sich Spanneinrichtungen 9.3, wie Saugvorrichtungen, befinden.

Der Transportsupport 6 fährt nacheinander das erste Bohr- und Dübelaggregat 9 und das zweite Bohr- und Dübelaggregat 9 an und setzt jeweils die Einzelplatte 4.3 mit ihrem Randbereich auf der Werkstückauflage 9.2 auf, wo sie zusätzlich durch die dortigen Spanneinrichtungen 9.3 fixiert wird. Während gleichzeitig die Einzelplatte 4.3 an dem Transportsupport 8 hängend gehalten wird, erfolgt an der dem Bohraggregat 9 zugekehrten, sich auf der Werkstückauflage 9.2 abstützenden und durch die jeweilige Spannvorrichtung 9.3 mitgehaltenen Werkstückseite das Einbohren der Dübellöcher und gegebenenfalls das Einsetzen der Dübel mittels der Werkzeuge 9.1. Danach wechselt die Einzelplatte 4.3 durch Verfahren des Transportsupports 6 zu dem zweiten Bohr- und Dübelaggregat 9 hinüber, um an der gegenüberliegenden Plattenschmalseite in gleicher Weise Dübellöcher einzubohren und gegebenenfalls Dübel einzusetzen. Vornehmlich kommt dies bei im Grundriß rechteckigen Einzelplatten 4.3 in Betracht, bei denen an jeweils zwei einander gegenüberliegenden Schmalseiten die beschriebene Bearbeitung vorgenommen wird. Erforderlichenfalls kann in weiterer Ausgestaltung der Erfindung der Transportsupport 6 die Einzelplatten 4.3 auch um 90 Grad drehen, sofern an weiteren Schmalseiten der Einzelplatten 4.3 die genannten Bearbeitungen vorgenommen werden müssen. Diese Bearbeitungen können gegebenenfalls dann erst vorgenommen werden, wenn die Schmalseiten der Einzelplatten 4.3 mittels eines Kantenanleimers beschichtet sind, was in einer Komplettbearbeitung auf einer Maschine gemäß Figur 1 erfolgen kann, sofern sie mit den Bohr- und Dübelaggregaten 9 gemäß dem Ausführungsbeispiel nach den Figuren 2 und 3 ausgerüstet ist. In diesem Fall sind die Bohr- und Dübelaggregate 9 oberhalb des zweiten Werkstücktisches 3 angeordnet.

Beim Ausführungsbeispiel nach den Figuren 2 und 3 ist anstelle des zweiten Bearbeitungstisches 3 eine Werkstücktransportvorrichtung 10 vorgesehen, deren Förderrichtung quer zur Längsrichtung des Portals 1 liegt. Bei der Transportvorrichtung 10 kann es sich um ein Förderband handeln. An der Oberseite der Transportvorrichtung ist eine Werkstückablage 10.1 gebildet, auf welche die fertig bearbeiteten, also formatierten und mit Dübellöchern sowie gegebenenfalls Dübeln versehenen Einzelplatten 4.3 von dem Transportsupport 6 abgesetzt werden.

## Patentansprüche

1. Verfahren zum Bearbeiten von plattenförmigen Werkstücken auf einer Holzbearbeitungsmaschine mit zwei unter einem feststehenden Portal hindurch verfahrbaren und positionierbaren Werkstücktischen, die Spanneinrichtungen zum Fixieren der Werkstücke in flachliegender Anordnung aufweisen, und mit an dem Portal in dessen Längsrichtung verfahrbaren und positionierbaren Bearbeitungsaggregaten, wobei die Bearbeitungsfolge der Werkstücke nacheinander über beide Werkstücktische führt und zwischen den Werkstücktischen die Werkstücke maschinell umgesetzt werden und wobei an der einen Seite des Portals am Verfahrweg des ersten Werkstücktisches an einem Rüstplatz, der von dem ersten Werkstücktisch in dessen einer Endlage gebildet wird, zumindest ein Werkstück in die Bearbeitungsfolge aufgegeben wird,
**dadurch gekennzeichnet,**
**daß** am Rüstplatz auf den Werkstücktisch eine großformatige Rohplatte aufgegeben wird und von dieser in der dem ersten Werkstücktisch zugeordneten Bearbeitungsfolge im Format kleinere Einzelplatten freigeschnitten und zur weiteren Bearbeitung auf den zweiten Werkstücktisch umgesetzt werden.

2. Verfahren nach Anspruch 1,
**dadurch gekennzeichnet,**
**daß** in der Bearbeitungsfolge an den formatierten
Einzelplatten Bohrungen an den in der Spannlage obenliegenden Seiten und/oder den dazu senkrechten Schmalseiten angebracht werden.

3. Verfahren nach Anspruch 1 oder 2, **dadurch gekennzeichnet,**
**daß** an den formatierten Einzelplatten in der dem zweiten Werkstücktisch zugeordneten Bearbeitungsfolge entlang zu beschichtender Schmalseiten ein Kantenanleimer angebracht und nachbearbeitet wird.

4. Verfahren nach einem der Ansprüche 1 - 3, **dadurch gekennzeichnet,**
**daß** die Werkstücke von dem zweiten Werkstücktisch nach Beendigung der Bearbeitungsfolge maschinell auf eine Abtransportvorrichtung umgesetzt werden.

5. Verfahren nach einem der Ansprüche 1 - 4, **dadurch gekennzeichnet,**
**daß** die Werkstücke beim maschinellen Umsetzen von oben her ergriffen und entlang dem Portal transportiert werden.

6. Holzbearbeitungsmaschine zum Bearbeiten von plattenförmigen Werkstücken mit zwei unter einem Portal (1) hindurch verfahrbaren und positionierbaren Werkstücktischen (2, 3), die Spanneinrichtungen (2.1; 3.1, 3.2) zum Fixieren der Werkstücke (4, 4.1,4.2) in flachliegender Anordnung aufweisen, ferner mit an dem Portal (1) in dessen Längsrichtung verfahrbaren und positionierbaren Bearbeitungseinheiten und mit einem an dem Portal (1) angeordneten, die Werkstücke (4.1, 4.2) aufnehmenden Transportsupport (6), der in Längsrichtung des Portals (1) verfahrbar und positionierbar ist, wobei am einen Ende des Verfahrweges des ersten Werkstücktisches (2) seitlich in Querrichtung neben dem Portal (1) sich ein Rüstplatz (2.2) befindet,
**dadurch gekennzeichnet,**
**daß** daß an der vom Rüstplatz (2.2) abgelegenen Längsseite (1.2) des Portals (1) zumindest ein Frässupport (5) mit wenigstens einer Arbeitsspindel (5.1) zur Aufnahme eines Fräs- oder Schneidwerkzeugs verfahrbar und positionierbar angeordnet und derart gesteuert ist, daß durch Relativbewegung zwischen dem Frässupport (5) und dem Werkstücktisch (2) ein zu vereinzelnder Bereich einer auf den Rüstplatz (2.2) aufgegebenen Rohplatte (4) freigeschnitten wird.

7. Holzbearbeitungsmaschine nach Anspruch 6,
**dadurch gekennzeichnet,**
**daß** der die Werkstücke (4.1, 4.2) aufnehmende Transportsupport (6) als Saugtraverse ausgebildet ist.

8. Holzbearbeitungsmaschine nach Anspruch 6 oder 7,
**dadurch gekennzeichnet,**
**daß** an dem Frässupport (5) zusätzlich Bohrspindeln (5.2, 5.2) zur Aufnahme von Bohrwerkzeugen in senkrechter Ausrichtung zu den Werkstücktischen (2, 3) angeordnet sind.

9. Holzbearbeitungsmaschine nach einem der Ansprüche 6 - 8,
**dadurch gekennzeichnet,**
**daß** der Arbeitsbereich des Frässupports (5) über beide Werkstücktische (2, 3) hinweg sich erstreckt.

10. Holzbearbeitungsmaschine nach einem der Ansprüche 6 - 9,
**dadurch gekennzeichnet,**
**daß** an der dem Rüstplatz (2.2) zugekehrten Längsseite (1.1) des Portals (1) ein Kantenanleimaggregat (7) verfahrbar und positionierbar angeordnet ist.

11. Holzbearbeitungsmaschine nach Anspruch 10,
**dadurch gekennzeichnet,**
**daß** der Arbeitsbereich des Kantenanleimaggregates (7) auf den zweiten Werkstücktisch (3) beschränkt ist.

12. Holzbearbeitungsmaschine nach einem der Ansprüche 6 - 11,
**dadurch gekennzeichnet,**
**daß** der zweite Werkstücktisch (3) mit in Querrichtung zum Portal (1) sich erstreckenden Traversen (3.1) ausgestattet ist, die in Längsrichtung des Portals (1) verfahrbar und positionierbar sind und auf denen in ihrer Längsrichtung verfahrbare und positionierbare Saugspanner (3.2) angeordnet sind.

13. Holzbearbeitungsmaschine nach einem der Ansprüche 8 -12
**dadurch gekennzeichnet,**
**daß** das Portal (1) zumindest an seinem einen Ende über den betreffenden Werkstücktisch (2,3) hinausragend verlängert und unter dem verlängerten Ende des Portals (1) eine von dem die Werkstücke (4.1, 4.2) aufnehmenden Transportsupport (6) anfahrbare Vorrichtung (8) zum Abtransport der fertig bearbeiteten Werkstücke (4.1, 4.2) angeordnet ist.

14. Holzbearbeitungsmaschine nach Anspruch 13,
**dadurch gekennzeichnet,**
**daß** das Portal (1) an seinen beiden Enden über beide Werkstücktische (2, 3) hinaus verlängert und im Bereich seines zweiten Endes ein von dem Kantenanleimaggregat (7) anfahrbares Kantenmagazin (7.1) angeordnet ist.

15. Holzbearbeitungsmaschine nach Anspruch 14,
**dadurch gekennzeichnet,**
**daß** der die Werkstücke (4.1, 4.2) aufnehmende Transportsupport (6) an der dem Rüstplatz (2.2) zugekehrten Längsseite (1.1) des Portals (1) angeord net ist und dieser Transportsupport (6) und das Kantenanleimaggregat (7) so gesteuert sind, daß der Transportsupport (6) nur dann bis über den zweiten Werkstücktisch verfahren werden kann, wenn sich das Kantenanleimaggregat (7) an dem Kantenmagazin (7.1) befindet.

16. Holzbearbeitungsmaschine nach einem der Ansprüche 6 - 15,
**dadurch gekennzeichnet,**
**daß** unterhalb des Portals (1) ein Bohr- und Dübelaggregat (9) angeordnet ist, dessen Werkzeuge (9.1) sich in einer von den plattenförmigen Werkstücken (4.1, 4.2) mit deren Schmalseiten mittels dem Transportsupport (6) anfahrbaren Höhe befinden.

17. Holzbearbeitungsmaschine nach Anspruch 16,
**dadurch gekennzeichnet,**
**daß** das Bohr- und Dübelaggregat (9) eine eigene Werkstückauflage (9.2) mit einer Spannvorrichtung (9.3) aufweist.

18. Holzbearbeitungsmaschine nach Anspruch 17,
**dadurch gekennzeichnet,**
**daß** die Werkstückauflage (9.2) in der Verfahrrichtung des Transportsupports (6) so schmal ausgeführt ist, daß die am Transportsupport (6) gehaltenen Werkstücke (4.1, 4.2) während der Bearbeitung durch das Bohr- und Dübelaggregat (9) lediglich an ihrem diesem Aggregat (9) zugekehrten Rand unterstützt sind.

19. Holzbearbeitungsmaschine nach einem der Ansprüche 16 - 18,
**dadurch gekennzeichnet,**
**daß** zwei Bohr- und Dübelaggregate (9) in gleicher Höhe mit Abstand voneinander einander gegenüberliegend angeordnet sind, wobei sich die Werkzeuge (9.1) an den einander zugekehrten Seiten dieser beiden Aggregate (9) befinden.

20. Holzbearbeitungsmaschine nach einem der Ansprüche 16 - 19,
**dadurch gekennzeichnet,**
**daß** das zumindest eine Bohr- und Dübelaggregat (9) eine Mehrzahl gleicher Werkzeuge (9.1) aufweist, die in einer Richtung hintereinander angeordnet sind, die quer zur Verfahrrichtung des Transportsupports (6) liegt.

21. Holzbearbeitungsmaschine nach einem der Ansprüche 16 - 20,
**dadurch gekennzeichnet,**
**daß** das zumindest eine Bohr- und Dübelaggregat (9) quer zum Portal (1) verfahrbar und positionierbar angeordnet ist.

22. Holzbearbeitungsmaschine nach einem der Ansprüche 16 - 21,
**dadurch gekennzeichnet,**
**daß** das Bohr- und Dübelaggregat (9) oberhalb des zweiten Werkstücktisches (3) angeordnet ist.

## Claims

1. Method for machining panel-form workpieces on a woodworking machine having two workpiece tables which can be moved and positioned below a fixed bridge, said workpiece tables comprising clamping devices for fixing the workpieces so that they lie flat, and having machining units which can be moved and positioned on the bridge in the longitudinal direction thereof, whereby the workpieces are machined one after the other using the two workpiece tables and the workpieces are conveyed by the machine between the workpiece tables and whereby at least one workpiece is introduced into the machining process on one side of the bridge on the movement path of the first workpiece table in a supply area which is formed by the first workpiece table in one of its end positions,
**characterised in that**
a large, unmachined panel is conveyed from the supply area to the workpiece table and smaller individual panels are cut from it in the machining sequence assigned to the first workpiece table and these smaller individual panels are conveyed to the second workpiece table for further machining.

2. Method according to claim 1,
**characterised in that**
bores are incorporated in the machining sequence on the formatted individual panels on the sides lying on top in the clamped position and/or on the narrow sides perpendicular thereto.

3. Method according to claim 1 or 2,
**characterised in that**
an edge bander is arranged and machined on the formatted individual panels along narrow sides to be coated in the machining sequence assigned to the second workpiece table.

4. Method according to one of the claims 1 - 3,
**characterised in that**
the workpieces are conveyed by the machine from the second workpiece table to a removal device after the end of the machining sequence.

5. Method according to one of the claims 1 - 4,
**characterised in that**
the workpieces are gripped from above during the machining process and transported along the bridge.

6. Woodworking machine for machining panel-form workpieces, having two workpiece tables (2, 3) which can be moved and positioned below a bridge (1), said workpiece tables (2, 3) comprising clamping devices (2.1; 3.1, 3.2) for fixing the workpieces (4, 4.1, 4.2) so that they lie flat, further having machining units which can be moved and positioned on the bridge (1) in the longitudinal direction thereof and having a transport support (6) arranged on the bridge (1) to receive the workpieces (4.1, 4.2) which can be moved and positioned in the longitudinal direction of the bridge (1), whereby there is a supply area (2.2) at one end of the movement path of the first workpiece table (2) to the side in the transverse direction beside the bridge (1),
**characterised in that**
at least one milling support (5) with at least one work spindle (5.1) for receiving a milling or cutting tool is arranged so that it can be moved and positioned on the longitudinal side (1.2) of the bridge (1) lying away from the supply area (2.2) and is controlled in such a way that through the relative movement between the milling support (5) and the workpiece table (2) an area to be cut from an unmachined panel (4) supplied to the supply area (2.2) is cut free.

7. Woodworking machine according to claim 6,
**characterised in that**
the transport support (6) receiving the workpieces (4.1, 4.2) is formed as a suction cross member.

8. Woodworking machine according to claim 6 or 7,
**characterised in that**
boring spindles (5.2, 5.2) are additionally arranged on the milling support (5) perpendicularly to the workpiece tables (2, 3) to receive boring tools.

9. Woodworking machine according to one of the claims 6 - 8,
**characterised in that** the work area of the milling support (5) extends beyond the two workpiece tables (2, 3).

10. Woodworking machine according to one of the claims 6 - 9,
**characterised in that**
an edge banding unit (7) is arranged so that it can be moved and positioned on the longitudinal side (1.1) of the bridge (1) facing the supply area (2.2).

11. Woodworking machine according to claim 10,
**characterised in that**
the work area of the edge banding unit (7) is limited to the second workpiece table (3).

12. Woodworking machine according to one of the claims 6 - 11,
**characterised in that**
the second workpiece table (3) is equipped with cross members (3.1) extending transversely to the bridge (1) which can be moved and positioned in the longitudinal direction of the bridge (1) and on which suction clamps (3.2) are arranged that can be moved and positioned in their longitudinal direction.

13. Woodworking machine according to one of the claims 8 - 12,
**characterised in that**
the bridge (1) extends at least at one end beyond the respective workpiece table (2, 3) and a device (8) for removing the finished workpieces (4.1, 4.2) is arranged below the extended end of the bridge (1) which can be reached by the transport support (6) receiving the workpieces (4.1, 4.2).

14. Woodworking machine according to claim 13,
**characterised in that**
the bridge (1) extends at both ends beyond the two workpiece tables (2, 3) and an edge magazine (7.1) which can be reached by the edge banding unit (7) is arranged in the region of the second end of the bridge (1).

15. Woodworking machine according to claim 14,
**characterised in that**
the transport support (6) receiving the workpieces (4.1, 4.2) is arranged on the longitudinal side (1.1) of the bridge (1) facing the supply area (2.2) and this transport support (6) and the edge banding unit (7) are controlled in such a way that the transport support (6) can only be moved over the second workpiece table if the edge banding unit (7) is on the edge magazine(7.1).

16. Woodworking machine according to one of the claims 6 - 15,
**characterised in that**
a boring and dowelling unit (9) is arranged below the bridge (1), the tools (9.1) of which are at a height that can be reached by the panel-like workpieces (4.1, 4.2) with their narrow sides by means of the transport support (6).

17. Woodworking machine according to claim 16,
**characterised in that**
the boring and dowelling unit (9) comprises its own workpiece support surface (9.2) with a clamping device (9.3).

18. Woodworking machine according to claim 17,
**characterised in that**
the workpiece support surface (9.2) is designed to be so narrow in the direction of movement of the transport support (6) that the workpieces (4.1, 4.2) held on the transport support (6) are supported during the machining by the boring and dowelling unit (9) merely on their edge facing this unit (9).

19. Woodworking machine according to one of the claims 16 18,
**characterised in that**
two boring and dowelling units (9) are arranged at the same height lying opposite each other at a distance, whereby the tools (9.1) are on the sides of these two units (9) that face each other.

20. Woodworking machine according to one of the claims 16 - 19,
**characterised in that**
the at least one boring and dowelling unit (9) comprises a plurality of the same tools (9.1) which are arranged one behind the other in a direction that is at right angles to the direction of movement of the transport support (6).

21. Woodworking machine according to one of the claims 16 - 20,
**characterised in that**
the at least one boring and dowelling unit (9) is arranged so that it can be moved and positioned at right angles to the bridge (1).

22. Woodworking machine according to one of the claims 16 - 21,
**characterised in that**
the boring and dowelling unit (9) is arranged above the second workpiece table (3).

## Revendications

1. Procédé pour l'usinage de pièces en forme de plaques sur une machine à usiner le bois avec deux tables porte-pièces, déplaçables et positionnables sous un portique fixe, qui présentent des dispositifs de serrage pour la fixation des pièces, disposées à plat, et avec des unités de traitement qui peuvent être déplacées sur le portique, dans la direction longitudinale de celui-ci et positionnées, la séquence d'usinage conduisant les pièces successivement sur les deux tables porte-pièces, et les pièces étant mécaniquement transférées entre les tables porte-pièce, et au moins une pièce à usiner étant amenée dans la séquence d'usinage, sur l'un des côtés du portique, sur la voie d'usinage de la première table porte-pièce, à un poste de préparation, qui est formé par la première table porte-pièce, dans l'une des positions finales de celle-ci,
**caractérisé en ce que**,
sur la table porte-pièce, une plaque brute de grand format est remise au poste de préparation et est découpée en plaques individuelles de plus petit format dans la séquence d'usinage associée à la première table porte-pièce, et transférée à la deuxième table porte-pièce pour l'usinage suivant.

2. Procédé selon la revendication 1,
**caractérisé en ce que**,
dans la séquence d'usinage, des alésages sont pratiqués dans les plaques individuelles mises à dimension, sur les côtés situés en haut, en position de serrage et /ou dans les côté étroits perpendiculaires.

3. Procédé selon revendication 1 ou 2,
**caractérisé en ce que**,
dans la séquence d'usinage associée à la deuxième table porte-pièce, un revêtement de chant est appliqué sur les plaques individuelles mises à dimension, le long des côtés étroits à revêtir, et rectifié.

4. Procédé selon l'une des revendications 1 à 3,
**caractérisé en ce que**
les pièces à usiner, après la fin de la séquence d'usinage, sont transférées mécaniquement sur un dispositif de transport.

5. Procédé selon l'une des revendications 1 à 4,
**caractérisé en ce que**
les pièces à usiner, lors du transfert mécanique, sont saisies d'en haut et transportées le long du portique.

6. Machine à usiner le bois pour le traitement de pièces en forme de plaques avec deux tables porte-pièces (2, 3), déplaçables et positionnables sous un portique (1), lesquelles présentent des dispositifs de serrage (2,1; 3.1, 3.2) pour la fixation des pièces (4, 4.1, 4.2), disposées à plat, de plus avec des unités d'usinage, qui peuvent être déplacées sur le portal dans la direction longitudinale de celui-ci et positionnés, et avec un support de transport (6), associé au portique (1), prenant en charge les pièces à usiner (4.1, 4.2), lequel peut être déplacé dans la direction longitudinale du portique (1) et positionné, un poste de préparation (2.2.) étant situé à l'extrémité de la voie de déplacement de la première table porte-pièce (2), latéralement, en direction transversale, à côté du portique (1),
**caractérisée en ce que**,
sur le côté longitudinal (1.2) du portique, éloigné du poste de préparation (2.2), est agencé au moins un porte-fraise (5), avec au moins une broche d'usinage pour recevoir un outil de fraisage ou de coupe, lequel peut être déplacé et positionné et qui est commandé de sorte que, par mouvement relatif entre le porte-fraise (5) et la table porte-pièce (2), une portion à détacher d'une plaque brute (4), remise au poste de préparation (2.2.), est découpée.

7. Machine à usiner le bois selon la revendication 6,
**caractérisée en ce que**
le support de transport (6), recevant les pièces (4.1, 4.2), est réalisé en tant que traverse d'aspiration.

8. Machine à usiner le bois selon revendication 6 ou 7,
**caractérisée en ce que**,
sur le porte-fraise (5), sont installées, en supplément, des broche de perçage (5.1, 5.2) qui, destinées à recevoir des mèches, sont orientées perpendiculairement par rapport aux tables porte-pièces (2, 3).

9. Machine à usiner le bois selon l'une des revendications 6 à 8,
**caractérisée en ce que**
le champ d'opération du porte-fraise (5) s'étend au-dessus des deux tables porte-pièces (2, 3).

10. Machine à usiner le bois selon l'une des revendications 6 à 9,
**caractérisée en ce que**,
sur le côté (1.1) du portique (1) orienté vers le poste de préparation (2.2.), est agencée une unité de collage de chants (7) qui peut être déplacée et positionnée.

11. Machine à usiner le bois selon la revendication 10,
**caractérisée en ce que**
le champ d'opération de l'unité de collage de chants (7) est limité à la deuxième table porte-pièce (3).

12. Machine à usiner le bois selon l'une des revendications 6 à 11,
**caractérisée en ce que**
la deuxième table porte-pièce (3) est équipée de traverses (3.1) qui, s'étendant perpendiculairement par rapport au portique (1), peuvent être déplacées et positionnées dans la direction longitudinale du portique (1), et sur lesquelles sont installés des dispositifs de maintien par aspiration (3.2), qui peuvent être déplacés dans leur sens longitudinal et positionnés.

13. Machine à usiner le bois selon l'une des revendications 8 à 12,
**caractérisée en ce que**
le portique (1) est prolongé, au moins à l'une de ses extrémités, en saillie au-delà de la table porte-pièce (2, 3) concernée, et que, sous l'extrémité prolongée du portique (1), est agencé, pour l'enlèvement des pièces usinées, finies (4.1, 4.2), un dispositif (8) qui peut être desservi par le support de transport (6) prenant en charge les pièces (4.1, 4.2).

14. Machine à usiner le bois selon la revendication 13,
**caractérisée en ce que**
le portique (1) est prolongé, à ses deux extrémité, au-delà des deux tables porte-pièces (2, 3), et que, dans la région de sa deuxième extrémité, est agencé un magasin de chants (7.1) qui peut être desservi par l'unité de collage de chants (7).

15. Machine à usiner le bois selon la revendication 14,
**caractérisée en ce que**
le support de transport (6), qui prend en charge les pièces (4.1, 4.2), est installé sur le côté longitudinal (1.1) du portique (1), orienté vers le poste de préparation (2,.2), et que ce support de transport (6) et l'unité de collage de chants (7) sont commandés de sorte que ledit support de transport (6) ne puisse être déplacé jusqu'au-dessus de la deuxième table porte-pièce que si l'unité de collage de chants (7) a atteint le magasin de chants (7.1).

16. Machine à usiner le bois selon l'une des revendications 6 à 15,
**caractérisée en ce que**,
sous le portique (1), est installée une unité de d'alésage et de chevillage, dont les outils (9.1) se trouvent à une hauteur que les pièces en forme de plaques (4.1, 4.2) peuvent atteindre, avec leurs côtés étroits, au moyen du support de transport (6).

17. Machine à usiner le bois selon la revendication 16,
**caractérisée en ce que**
l'unité d'alésage et de chevillage (9) présente un support porte-pièces (9.2) propre, avec un dispositif de maintien par serrage (9.3).

18. Machine à usiner le bois selon la revendication 17,
**caractérisée en ce que**
le support porte-pièces (9.2) est si étroit, dans la direction de déplacement du support de transport (6), que les pièces (4.1, 4.2), fixées au support de transport (6), ne sont soutenues, pendant l'usinage avec l'unité d'alésage et de chevillage (9), que par leur bord orienté vers cette unité (9).

19. Machine à usiner le bois selon l'une des revendications 16 à 18,
**caractérisée en ce que**
deux unités d'alésage et de chevillage (9) son installées à la même hauteur, à intervalle l'une de l'autre, les outils (9.1) se trouvant sur les côtés de ces deux unités (9) qui sont opposés l'un à l'autre.

20. Machine à usiner le bois selon l'une des revendications 16 à 19,
**caractérisée en ce que**
une unité d'alésage et de chevillage (9) au moins présente plusieurs outils semblables (9.1), qui sont disposés les uns derrière les autres, dans une direction qui est perpendiculaire au sens de déplacement du support de transport (6).

21. Machine à usiner le bois selon l'une des revendications 16 à 20,
**caractérisée en ce que**
une unité d'alésage et de chevillage (9) est disposée, mobile et positionnable, perpendiculairement par rapport au portique (1).

22. Machine à usiner le bois selon l'une des revendications 16 à 20,
**caractérisée en ce que**
l'unité d'alésage et de chevillage (9) est disposée au-dessus de la deuxième table porte-pièce (3).
